# FASCICULE DE BREVET EUROPEEN

(11) **EP 3 731 117 B1**
(45) Date de publication et mention de la délivrance du brevet: **11.08.2021**
(21) Numéro de dépôt: 20171284.1
(22) Date de dépôt: 24.04.2020
(51) Int. Cl.: G06F 21/32, H04L 9/32, H04L 9/08

(54) **PROCEDES D'ENROLEMENT DE DONNEES D'UN DOCUMENT D'IDENTITE D'UN INDIVIDU ET D'AUTHENTIFICATION D'UN DOCUMENT D'IDENTITE**
VERFAHREN ZUR SPEICHERUNG VON DATEN EINES IDENTIFIKATIONSDOKUMENTS UND AUTHENTIFIZIERUNG VON DIESEM IDENTIFIKATIONSDOKUMENT
METHOD OF ENROLLING DATA OF AN IDENTIFICATION DOCUMENT OF AN INDIVIDUAL AND AUTHENTICATING SAID IDENTIFICATION DOCUMENT

(30) Priorité: 25.04.2019 FR 1904375
(43) Date de publication de la demande: 28.10.2020
(73) Titulaire: Idemia Identity & Security France, 92400 Courbevoie (FR)
(72) Inventeur: BAHLOUL, Sébastien, 92400 COURBEVOIE (FR)
(74) Mandataire: Regimbeau

(56) Documents cités:
- EP-A1- 3 386 143
- WO-A1-2012/156648
- MICHAEL ADJEDJ ET AL: "Biometric Identification over Encrypted Data Made Feasible", 14 décembre 2009 (2009-12-14), INFORMATION SYSTEMS SECURITY, SPRINGER BERLIN HEIDELBERG, BERLIN, HEIDELBERG, PAGE(S) 86 - 100, XP019135848, ISBN: 978-3-642-10771-9 * abrégé * * Section 1 Section 4 *

## Description

### DOMAINE DE L'INVENTION

L'invention concerne des procédés d'enrôlement d'un document d'identité et d'authentification de ce document d'identité.

### ETAT DE LA TECHNIQUE

La détention d'un document d'identité (carte d'identité, passeport, permis de conduire, carte de sécurité sociale, etc.) en cours de validité justifie de l'identité d'un individu.

Les documents d'identité consistent en un support généralement en papier ou en plastique sur lequel sont imprimées une photo ainsi que des informations alphanumériques personnelles (nom, prénom, date de naissance, etc.) de son détenteur. On trouve également une bande appelée MRZ (Machine-Readable Zone, Zone de lecture optique), qui contient un code (généralement deux lignes de 36 caractères) résumant les informations alphanumériques du document. Alternativement à la MRZ, on peut trouver un code-barre de type PDF-417 contenant les mêmes informations.

Généralement, les documents d'identité présentent un grand nombre d'éléments de sécurité de haut niveau tels des filigranes ou des hologrammes pour prévenir la falsification. La durée de vie d'un tel document est généralement limitée (10 ou 15 ans), car l'apparence de son possesseur change progressivement, et les éléments de sécurité évoluent.

Lors d'un contrôle d'un individu par une entité, par exemple à l'entrée d'un bâtiment, on lui demande de présenter son document d'identité pour authentification. Il est souhaitable que cette procédure soit la plus rapide possible, tout en étant la plus sécurisée. En effet, le risque est par exemple que des individus recherchés présentent un document d'identité falsifié dans lequel des informations ont été modifiée, par exemple la photographie.

On connaît des demandes FR3047688 puis FR1759292 des procédés d'enrôlement de données destinées à être utilisées pour contrôler automatiquement l'identité d'un individu, et des procédés associés de contrôle d'identité, basées sur un mécanisme très astucieux de génération à partir d'un élément visuel d'un document d'identité (en particulier la photo) d'une donnée de sécurité appelée « Digital Photo Seal ». Cette donnée de sécurité constitue une sorte de signature de l'élément visuel : des images acquises d'un même élément visuel, quelles que soient les conditions d'acquisition (i.e. y compris suite à scan ou photocopie), conduisent à l'obtention de données de sécurité sensiblement identiques. Au contraire, la moindre modification de l'élément visuel entraîne une forte variation de cet élément de sécurité.

Ainsi, il suffit de stocker sur une base de données d'un serveur la donnée de sécurité de référence « attendue » pour un document donné, et de la comparer avec celle « candidate » générée à partir d'une copie de ce document, pour savoir si l'élément visuel de ce document est intègre ou non.

En particulier, pour garantir la sécurité de la donnée de référence sur le serveur, celle-ci est « masquée » par application d'une procédure d'encodage (typiquement une procédure d'esquisse de type sécure sketch) à la donnée de référence et à une donnée d'aléa, et la donnée de référence masquée est stockée dans la base de données avec une empreinte cryptographique, i.e. un haché, d'une concaténation de la MRZ avec ledit aléa.

On peut alors authentifier un document d'identité présenté par un individu sur la base de sa MRZ et de la photographie : une donnée de sécurité candidate est obtenue à partir de la photographie du document présenté, et il est alors possible par application d'une procédure de décodage de retrouver la donnée d'aléa si la photographie du document présenté est identique à celle sur la base de laquelle la donnée de sécurité de référence a été générée, et de vérifier que le haché d'une concaténation de la MRZ avec ledit aléa correspond à celui stocké.

Cette solution apporte entière satisfaction. Plus récemment, il a été proposé de stocker également dans le serveur des données alphanumériques, en particulier les données dites « visuelles », c'est-à-dire les données imprimées sur le document d'identité telles que des données d'état civil (nom, prénom, adresse, date de naissance, etc.) ou des données techniques telles que la date d'expiration du document d'identité. Cela éviterait en effet de les retaper à la main.

Cependant, bien qu'il s'agisse d'informations « accessibles » car inscrites sur le document d'identité, il s'agit de données personnelles qui ne peuvent pas être stockées librement sur un serveur, ce d'autant plus que ces serveurs ont généralement une base non chiffrée à laquelle des pirates pourraient accéder en cas d'attaque.

Il n'y a aujourd'hui que deux façons respectueuses de la vie privée qui permettent d'obtenir automatiquement ces données alphanumériques :
- Soit analyse de la MRZ dont on rappelle qu'elle résume les informations alphanumériques du document, cependant d'une part certaines informations en sont exclues (par exemple l'adresse) et d'autre part seulement des caractères normalisés sont utilisés et on perd par exemple les accents ou les cédilles, d'où des risques d'erreur ;
- soit par OCR (reconnaissance optique de caractères) sur une image du document d'identité, ce qui permet théoriquement de disposer de toutes les données alphanumériques, mais présente un taux d'erreur de lecture élevé qui n'est pas acceptable s'il n'y a pas de vérification humaine.

Il serait ainsi souhaitable de disposer d'une solution simple, fiable, sécurisée, et totalement respectueuse de la vie privée, d'obtention des données alphanumériques ou toute autre donnée personnelle.

Les documents de l'art antérieur WO2012156648-A1, EP3386143-A1 et XP19135848 divulguent des procédés d'enrôlement de données biométriques.

### PRESENTATION DE L'INVENTION

Selon un premier aspect, l'invention concerne un procédé d'enrôlement de données d'un document d'identité d'un individu, le procédé étant caractérisé en ce qu'il comprend la mise en œuvre par des moyens de traitement de données d'un serveur d'étapes de :
(A) Réception d'une photographie dudit individu visible sur ledit document d'identité, une donnée de lecture optique du document d'identité, et d'au moins une donnée personnelle dudit individu ;
(B) Extraction par analyse de ladite photographie d'une information de référence représentative de l'apparence de ladite photographie ;
(C) Génération d'une donnée d'aléa, calcul d'une donnée encodée par application d'une procédure d'encodage à ladite information de référence représentative de l'apparence de ladite photographie et à ladite donnée d'aléa ;
(D) Stockage sur des moyens de stockage de données du serveur de :
   - Ladite donnée encodée ;
   - Une empreinte cryptographique d'une première concaténation de la donnée de lecture optique du document d'identité et de la donnée d'aléa ;
   - Un chiffré avec une empreinte cryptographique d'une deuxième concaténation de la donnée de lecture optique du document d'identité et de la donnée d'aléa, différente de la première concaténation, de l'au moins une donnée personnelle dudit individu.

Selon d'autres caractéristiques avantageuses et non limitatives :
- la procédure d'encodage est une procédure d'esquisse d'un algorithme de type « secure sketch » ;
- la donnée de lecture optique du document d'identité est une donnée de type MRZ, QR code ou PDF417 ;
- ladite donnée personnelle dudit individu est une donnée alphanumérique associé audit individu, ladite photographie de l'individu, ladite donnée de lecture optique, et ladite au moins une donnée alphanumérique sont imprimées sur le document d'identité ;
- l'information de référence représentative d'une apparence attendue de ladite photographie est une donnée de sécurité de type Digital Photo Seal ;
- la première et la deuxième concaténation correspondent aux deux sens possibles de concaténation de la donnée de lecture optique du document d'identité et de la donnée d'aléa.

Selon un deuxième aspect, l'invention concerne un procédé d'authentification d'un document d'identité, caractérisé en ce qu'il comprend la mise en œuvre d'étapes de ;
(b) Réception par des moyens de traitement de données d'un serveur d'une image acquise dudit document d'identité, l'image représentant au moins une photographie d'un individu et une donnée de lecture optique visibles sur ledit document d'identité ;
(c) Extraction par analyse de ladite image acquise par les moyens de traitement de données du serveur de :
   - une information candidate représentative de l'apparence de ladite photographie tel que représentée dans l'image acquise ;
   - ladite donnée de lecture optique tel que représentée dans l'image acquise ;
(d) Calcul d'une donnée décodée correspondant à une donnée d'aléa par application d'une procédure de décodage à ladite information candidate représentative de l'apparence de ladite photographie et à une donnée encodée stockée sur les moyens de stockage de données du serveur ;
(e) Vérification qu'une empreinte cryptographique d'une première concaténation de la donnée de lecture optique extraite et de la donnée décodée coïncide avec l'empreinte cryptographique de la première concaténation de la donnée de lecture optique du document d'identité et de la donnée d'aléa stockée sur les moyens de stockage de données du serveur ;
(f) Déchiffrement de l'au moins une donnée personnelle dudit individu chiffrée stockée sur les moyens de stockage de données du serveur, au moyen de l'empreinte cryptographique d'une deuxième concaténation de la donnée de lecture optique extraite et de la donnée décodée.

Selon d'autres caractéristiques avantageuses et non limitatives, le procédé comprend une étape (a) d'acquisition préalable de ladite image dudit document d'identité représentant au moins une photographie d'un individu et une donnée de lecture optique visibles sur ledit document d'identité par des moyens d'acquisition optique d'un équipement client.

Selon un troisième aspect, l'invention concerne un serveur d'authentification, caractérisé en ce qu'il comprend des moyens de stockage de données et des moyens de traitement de données configurés pour :
- Recevoir une photographie dudit individu visible sur ledit document d'identité, une donnée de lecture optique du document d'identité, et au moins une donnée personnelle dudit individu ;
- Extraire par analyse de ladite photographie une information de référence représentative de l'apparence de ladite photographie ;
- Générer une donnée d'aléa, et calculer une donnée encodée par application d'une procédure d'encodage à ladite information de référence représentative de l'apparence de ladite photographie et à ladite donnée d'aléa ;
- Stocker sur les moyens de stockage de données :
   - Ladite donnée encodée ;
   - Une empreinte cryptographique d'une première concaténation de la donnée de lecture optique du document d'identité et de la donnée d'aléa ;
   - Un chiffré avec une empreinte cryptographique d'une deuxième concaténation de la donnée de lecture optique du document d'identité et de la donnée d'aléa, différente de la première concaténation, de l'au moins une donnée personnelle dudit individu.

Selon d'autres caractéristiques avantageuses et non limitatives, les moyens de traitement de données sont en outre configurés pour :
- Recevoir une image acquise d'un document d'identité, l'image représentant au moins une photographie d'un individu et une donnée de lecture optique visibles sur ledit document d'identité ;
- extraire par analyse de ladite image acquise :
   - une information candidate représentative de l'apparence de ladite photographie tel que représentée dans l'image acquise ;
   - ladite donnée de lecture optique tel que représentée dans l'image acquise ;
- Calculer une donnée décodée correspondant à une donnée d'aléa par application d'une procédure de décodage à ladite information candidate représentative de l'apparence de ladite photographie et à une donnée encodée stockée sur les moyens de stockage de données ;
- Vérifier qu'une empreinte cryptographique d'une première concaténation de la donnée de lecture optique extraite et de la donnée décodée coïncide avec l'empreinte cryptographique de la première concaténation de la donnée de lecture optique du document d'identité et de la donnée d'aléa stockée sur les moyens de stockage de données ;
- Déchiffrer l'au moins une donnée personnelle dudit individu chiffrée stockée sur les moyens de stockage de données, au moyen de l'empreinte cryptographique d'une deuxième concaténation de la donnée de lecture optique extraite et de la donnée décodée.

Selon un quatrième et un cinquième aspect, l'invention concerne un produit programme d'ordinateur comprenant des instructions de code pour l'exécution d'un procédé selon le premier aspect d'enrôlement de données d'un document d'identité d'un individu ou selon le deuxième aspect d'authentification d'un document d'identité ; et un moyen de stockage lisible par un équipement informatique sur lequel un produit programme d'ordinateur comprend des instructions de code pour l'exécution d'un procédé selon le premier aspect d'enrôlement de données d'un document d'identité d'un individu ou selon le deuxième aspect d'authentification d'un document d'identité.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

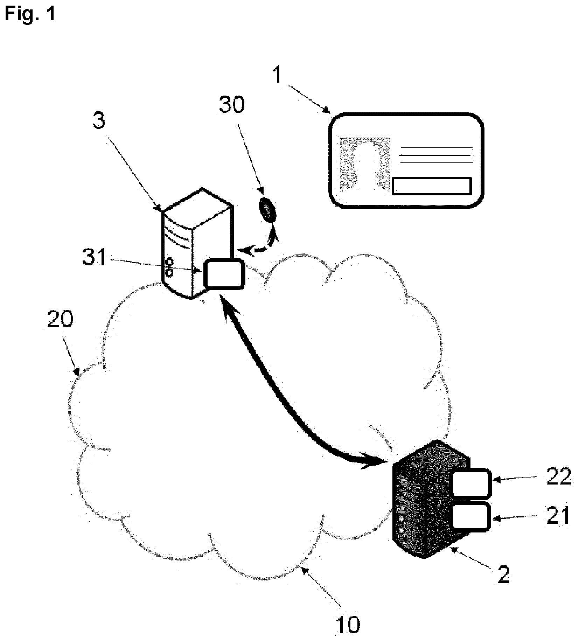

La figure 1 représente schématiquement un système pour la mise en œuvre des procédés selon l'invention.

### DESCRIPTION DETAILLEE

### Architecture

La présente invention concerne d'une part un procédé d'enrôlement d'informations d'un document d'identité 1 d'un individu, et d'autre part un procédé d'authentification de ce document d'identité 1.

En référence à la **figure 1**, on a représenté schématiquement une architecture de système d'authentification pour la mise en œuvre des présents procédés. Ce système comprend au moins un document d'identité 1 et un serveur 2. Le système peut également comprendre un équipement client 3 connecté au serveur 2 via un réseau 20 tel qu'Internet.

Le document d'identité 1 est un objet personnel à un individu (de nombreux individus peuvent posséder chacun un tel document d'identité), et constitue un titre officiel, avantageusement émis par un organisme gouvernemental. Ce document peut prendre de nombreuses formes telle qu'une carte d'identité ou un passeport, et peut être éventuellement électronique. Selon un mode de réalisation, il prend la forme d'une carte à puce (de type « smart card ») aux dimensions standard et généralement en PVC ou polycarbonate.

Dans tous les cas, le document d'identité 1 comporte une surface solide sur laquelle sont imprimées un certain nombre d'informations et en particulier :
- Une photographie de l'individu détendeur de la carte (et éventuellement une autre donnée « graphique » telle qu'une signature de l'individu) ;
- une donnée de lecture optique (c'est-à-dire lisible automatiquement, destinée à des ordinateurs), de type MRZ, QR code ou PDF417 (on prendra l'exemple de la MRZ dans la suite du document, mais on comprendra qu'on n'est pas limité à ce type de donnée de lecture optique) ;
- Des données alphanumériques variées, dites « données visuelles », choisies notamment parmi :
   ∘ Numéro complet du document d'identité 1 ;
   ∘ Date d'expiration ;
   ∘ Date de délivrance ;
   ∘ Nom ;
   ∘ Prénom(s) ;
   ∘ Nationalité ;
   ∘ Date de Naissance ;
   ∘ Lieu de Naissance ;
   ∘ Sexe ;
   ∘ Taille ;
   ∘ Adresse ;
   ∘ etc.

Le serveur 2 est un équipement distant, sécurisé, typiquement d'une autorité ou d'un fournisseur de solution de sécurité. Il comprend des moyens de traitement de données 21 (de type processeur) et des moyens de stockage de données 22 (une mémoire, par exemple un disque dur).

L'équipement client 3 est un terminal local comprenant des moyens d'acquisition optique 30 (typiquement un appareil photo ou un scanner), et adapté pour acquérir et le cas échéant transmettre au serveur 2 une image (du document 1 comme on le verra). L'équipement client 3 et le serveur 2 comprennent avantageusement des interfaces de communications leur permettant de dialoguer à distance. De manière préférée, le client 3 est un terminal mobile de l'individu (en particulier de type smartphone).

On note que l'équipement 3 peut prendre de nombreux modes de réalisation. Plus précisément et comme l'on verra, il suffit pour la mise en œuvre de l'invention que le serveur 2 puisse recevoir une image acquise du document d'identité 1 d'une façon ou d'une autre, y compris indirectement. A noter en outre que l'équipement client 3 peut comprendre ses propres moyens de traitement de données 31 et mettre en œuvre certains traitements, voir plus loin.

Dans tous les cas, comme expliqué l'équipement client 3 peut acquérir une image d'une image du document d'identité 1, i.e. photographier une photocopie plutôt que le document 1 directement, voire d'une photocopie d'une photocopie, etc. Comme l'on verra, il suffira que l'image acquise représente le document 1. On comprendra que le présent procédé n'est limité à aucune façon d'obtenir cette image et aucune nature en particulier (l'image acquise peut être en noir et blanc, déformée, etc.).

On note qu'il est tout à fait possible que d'autres entités soient connectées au serveur 2 et à l'équipement 3, en particulier des serveurs mettent en œuvre des services consommant les assertions produites par l'équipement 3, i.e. de services souhaitant l'authentification du document 1, par exemple un serveur d'une banque, d'un hôtel, etc.

### Digital Photo Seal

De manière connue les présents procédés utilisent une information représentative d'une apparence d'une photographie (ou un autre élément graphique du document 1), c'est-à-dire une donnée descriptive d'au moins un fragment de cette photographie tel qu'il apparait, i.e. une « signature », qui va permettre des comparaisons.

On désigne comme information « de référence » l'information représentative de l'apparence « théorique » de la photographie, i.e. tel qu'attendue. Par contraste, on désigne comme information « candidate » l'information représentative de l'apparence constatée de la photographie, i.e. tel que représentée dans une image acquise du document 1. On comprend que cette apparence constatée n'est généralement pas parfaitement identique à l'apparence attendue, du fait des conditions des défauts inhérents à l'acquisition d'une image, et à la variabilité des conditions de prise de vue (éclairage, bougé, distance, etc.). Néanmoins, ladite information représentative de l'apparence est choisie de telle sorte que si deux photographies ont des apparences qui coïncident (i.e. il s'agit de la même photographie même si les conditions de prise de vue ne sont pas identiques), alors leurs informations représentatives coïncident (i.e. présentent une distance selon une métrique donnée inférieure à un seuil) également.

Ainsi, l'information de référence et l'information candidate coïncident si et seulement si l'apparence constatée et l'apparence attendue de la photographie coïncide, i.e. qu'il s'agit bien de la même photographie, en d'autres termes que la photographie imprimée sur le document d'identité 1 n'a pas été frauduleusement altérée. Cette vérification peut être faite pour chaque autre élément graphique tel qu'une signature.

On pourra utiliser comme information représentative de l'apparence de la photographie le « Digital Photo Seal » (DPS) qu'on prendra comme exemple dans la suite de la présente demande, i.e. la donnée de sécurité telle que décrite dans les demandes citées dans l'introduction ou plus précisément la demande EP3206192, basée sur la position de points singuliers de l'élément graphique, ou toute autre « signature » d'un objet graphique tel qu'une photographie.

Le DPS d'une photographie est une caractéristique de cette image qui n'est pas un modèle biométrique, et peut par exemple comprendre un histogramme de gradient orienté (on parle alors d'algorithme à descripteur HOG). On peut alternativement utiliser un algorithme de classification du type employant un réseau de neurones convolutionnel, également connu sous l'acronyme CNN (pour l'anglais Convolutional Neural Network).

### Procédé d'enrôlement

Selon un premier aspect est proposé un procédé mis en œuvre par les moyens de traitement de données 21 du serveur 2 d'enrôlement de données du document d'identité 1 d'un individu.

Le procédé commence par une étape (A) de réception d'une photographie dudit individu visible sur ledit document d'identité 1, une donnée de lecture optique du document d'identité 1, et d'au moins une donnée personnelle dudit individu, en particulier une donnée alphanumérique associée audit individu, bien qu'il soit également possible de prendre toute autre donnée relative à la personne tel qu'un template biométrique ou une preuve d'identification. De manière préférée, ladite donnée personnelle est une donnée alphanumérique associée plus précisément au document d'identité 1, en particulier une « donnée visuelle » imprimée sur le document 1 comme indiqué précédemment, mais on comprend qu'il peut s'agir également d'une adresse e-mail, d'un identifiant d'accès, etc., qui ne sont pas nécessairement imprimés sur le document 1.

Cette étape (A) peut être mise en œuvre au moyen d'une image du document d'identité 1 (comme ce sera expliqué pour le procédé d'authentification), mais de façon préférée, pour éviter les problèmes de numérisation et de perte de qualité, ces données (i.e. la photographie, la donnée de lecture optique et/ou la donnée personnelle) sont obtenues directement, par exemple depuis une autorité gouvernementale. Cela permet par ailleurs une éventuelle mise à jour des données, voir plus loin.

Dans une étape (B) est comme expliqué mise en œuvre l'extraction par analyse de ladite photographie de l'information (notée DPS par commodité, bien que comme expliqué le présent procédé n'est pas limité au Digital Photo Seal) de référence représentative de l'apparence de ladite photographie, au moyen d'un algorithme connu.

Ensuite, dans une étape (C) une donnée d'aléa (notée RNG) est générée, de sorte à calculer une donnée encodée (notée SSK par commodité, bien que comme expliqué le présent procédé n'est pas limité au secure sketch) par application d'une procédure d'encodage à ladite information DPS de référence représentative de l'apparence de ladite photographie et à ladite donnée d'aléa RNG, i.e. SSK=enc(DPS, RNG).

La donnée d'aléa RNG est comme son nom l'indique une donnée de valeur aléatoire apportant de l'aléa, qui a une importance car sa connaissance va permettre de prouver que l'on dispose bien du document d'identité 1

De préférence, la procédure d'encodage est une procédure d'esquisse d'un algorithme de type « secure sketch ». Cette procédure d'esquisse est connue de l'homme du métier. Elle notamment décrite dans le document « Fuzzy Extractors: How to Generate Strong Keys from Biometrics and Other Noisy Data », par Dodis et al. (voir la définition 3 donnée en page 11 de ce document).

D'autres procédures d'encodage peuvent être toutefois être utilisées par l'unité de traitement 4 en lieu et place d'une procédure d'esquisse (par exemple des procédures d'algorithmes de type « fuzzy extractor » et de façon générale la logique floue).

A noter que la procédure d'encodage peut être appliquée directement à ladite information de référence représentative de l'apparence de ladite photographie, mais également indirectement, c'est-à-dire à des données dérivées de cette information de référence pour rajouter de l'entropie. Par exemple, on peut utiliser comme donnée dérivée une combinaison de l'information de référence avec la donnée de lecture optique, notamment un certain nombre des premiers bits de son empreinte cryptographique (voir plus loin). En particulier, cette combinaison peut être un « ou exclusif », i.e. XOR(DPS;HMRZ), HMRZ étant les n premiers bits de l'empreinte cryptographique de la donnée de lecture optique (dans l'exemple où c'est la MRZ) où n est le nombre de bits de l'information de référence (le même nombre de bits est nécessaire pour le XOR).

Dans tous les cas, la procédure d'encodage permet de « masquer » la donnée d'aléa RNG par le résultat du traitement DPS de la photographie, mais de manière retrouvable au moyen d'une procédure de décodage complémentaire de la procédure d'encodage. Lorsque la procédure d'encodage utilisée pour l'enrôlement est une procédure d'esquisse d'un algorithme de type « secure sketch », la procédure de décodage est la procédure récupération (« recovery » en anglais) du même algorithme de type « secure sketch ». Une telle procédure de récupération est également connue de l'homme du métier (voir la définition 3 donnée en page 11 du document « Fuzzy Extractors: How to Generate... » susmentionné).

Plus précisément, si on note DpsRef l'information de référence et DpsCand une information candidate (avec SSK=enc(RNG, DpsRef)), alors les procédures d'encodage et de décodage sont telles que si DpsCand est suffisamment proche de DpsRef (i.e. différent de moins d'un seuil, ce qui est normalement le cas si on extrait l'information représentative de la même photographie que celle à partir de laquelle on a généré l'information de référence, même si on note qu'il reste impossible que les deux valeurs coïncident, on aura toujours |DpsCand-DpsRef|>0) alors la donnée décodée est égale à la donnée d'aléa RNG.

Si au contraire DpsCand n'est pas suffisamment proche de DpsRef, alors la donnée décodée n'est pas la bonne valeur de la donnée d'aléa.

Mathématiquement, la procédure de décodage donne, pour une valeur de la donnée encodée SSK et pour une valeur d'information candidate DpsCand, « la valeur x=dec(SSK, DpsCand) telle qu'il existe une valeur ε de norme inférieure à un seuil donné vérifiant SSK=enc(x,DpsCand+ε) », x étant égal à la valeur d'aléa RNG si on a bien DpdCand+ε=DpsRef.

On rappellera que de telles procédures d'encodage et de décodage sont connues de l'homme du métier, et peuvent faire l'objet de nombreux modes de réalisation. Il sera d'ailleurs possible d'augmenter l'entropie de la donnée encodée en appliquant la procédure d'encodage à davantage de données que seules l'information représentative de l'apparence de ladite photographie et la donnée d'aléa.

Le présent procédé se distingue tout particulièrement dans une étape (D) de Stockage sur les moyens de stockage de données 22 du serveur 2 de :
- Ladite donnée encodée SSK ;
- Une empreinte cryptographique d'une première concaténation de la donnée de lecture optique du document d'identité 1 et de la donnée d'aléa RNG ;
- Un chiffré avec l'empreinte cryptographique d'une deuxième concaténation de la donnée de lecture optique du document d'identité 1 et de la donnée d'aléa RNG, différente de la première concaténation, de l'au moins une donnée personnelle dudit individu.

On comprend qu'aucune de ces données n'est exploitable en soi car :
- Ladite donnée encodée SSK ne permet seule ni de retrouver l'information DPS de référence ni la donnée d'aléa RNG ;
- L'empreinte cryptographique d'une première concaténation de la donnée de lecture optique du document d'identité 1 et de la donnée d'aléa RNG est une simple empreinte n'apportant aucune information ;
- Le chiffré des données personnelles n'est lisible par personne sans la clé.

L'étape (D) peut comprendre le chiffrement de l'au moins une donnée personnelle dudit individu puis son stockage. Ces données peuvent être indexées dans la mémoire 22 avec une empreinte cryptographique d'un identifiant du document d'identité 1, généralement obtenu de la MRZ.

Par empreinte cryptographique, ou haché (en anglais « hash »), on entend le résultat d'une fonction de hachage cryptographique prédéterminée.

De manière préférée, les première et deuxième concaténations correspondent à des concaténations dans deux sens différents, par exemple MRZ|RNG pour la première concaténation et RNG|MRZ pour la deuxième concaténation, mais on pourra utiliser toute autre construction telles que deux concaténations dans le même ordre mais incluant un caractère prédéterminé au milieu, par exemple MRZ|1|RNG et MRZ|2|RNG.

Il est entendu que la donnée de lecture optique du document d'identité 1 et la donnée d'aléa peuvent être considérés comme des séquences de bits. Le nombre de bits de la concaténation est ainsi la somme des nombres de bits respectifs de la donnée de lecture optique du document d'identité 1 et de la donnée d'aléa.

Par commodité, on note première empreinte ladite empreinte cryptographique de la première concaténation (h(MRZ|RNG) en particulier), et deuxième empreinte l'empreinte cryptographique de la deuxième concaténation (h(RNG|MRZ) en particulier).

L'astuce de ces multiples concaténations permet la formation de plusieurs empreintes complètement indépendantes à partir des mêmes données. En effet, connaissant la première empreinte (qui est stockée sur la mémoire 22, et qui pourrait donc être obtenue par un pirate), il n'est pas possible d'obtenir la deuxième empreinte. Il reste nécessaire pour obtenir celle-ci de détenir la valeur d'aléa RNG, laquelle ne peut être retrouvée qu'en disposant de l'information de référence.

Ainsi, la ou les données personnelles chiffrées avec la deuxième empreinte cryptographique (i.e. la deuxième empreinte est utilisée comme clé) restent accessible seulement au détendeur du document d'identité 1, de sorte que le serveur 2 ne peut manipuler ni ne connaitre les données personnelles de l'utilisateur, qui peuvent être stockées en toute sécurité.

La première empreinte peut être associée dans le serveur 2 à un descripteur de l'état du document d'identité 1, par exemple « OK », « Expiré » ou « KO ».

A noter que le procédé d'enrôlement peut être répété à intervalles réguliers pour vérifier ou mettre à jour les données personnelles. Les données récentes et fiables pourront être récupérées depuis une entité gouvernementale. De surcroit, un document d'identité 1 n'a qu'une durée de vie limitée, et doit régulièrement être renouvelé.

### Authentification du document d'identité

On suppose à présent que l'enrôlement a été réalisé avec succès, et que le document d'identité est à présent utilisable.

Dans un mode de réalisation préféré, le procédé d'authentification commence par une étape (a) d'acquisition d'une façon ou d'une autre (par exemple via les moyens d'acquisition 30 du client 3) d'une image du document d'identité 1, l'image représentant au moins la photographie de l'individu et la donnée de lecture optique du document d'identité 1 (la MRZ) visibles sur ledit document d'identité 1. Préférentiellement, ladite image représente tout le document d'identité 1, du moins toute une face. Comme expliqué, il peut être nécessaire d'acquérir plusieurs images, par exemple pour voir toutes les faces.

Typiquement, c'est l'individu qui prend en photo son document d'identité 1 avec son terminal mobile.

On va à présent décrire la partie principale du procédé d'authentification d'un individu présentant un document d'identité 1 comme étant le sien, et fournissant à ce titre une image acquise de ce document d'identité 1.

L'objectif est de vérifier que l'étape (a) s'est bien déroulée comme décrit précédemment, et qu'on n'est pas en présence d'un faux (par exemple une image qui aurait été modifiée frauduleusement). Pour cela, l'individu ou toute autre entité qui souhaite l'authentification du document 1 soumet cette image au serveur 2.

Dans une étape (b), les moyens de traitement de données 21 du serveur 2 reçoivent ladite image acquise du document d'identité 1 présenté par ledit individu. Comme expliqué, l'image représente au moins la photographie de l'individu et la donnée de lecture optique du document d'identité 1 visibles sur ledit document d'identité 1.

Dans une étape (c), les moyens de traitement de données 21 du serveur 2 analysent l'image, de sorte à extraire :
- une information (DPS) candidate représentative de l'apparence de la photographie tel que représenté dans l'image acquise ;
- la donnée de lecture optique du document d'identité 1

L'extraction de l'information candidate comprend l'identification de la photographie qui apparait dans l'image, et l'obtention de l'information candidate de la même façon que l'information de référence a été obtenue lors de l'enrôlement. L'identification de la photographie peut être faite grâce à des modèles et des masques (en effet, les documents d'identité ont toujours la même organisation), et ainsi, l'analyse de l'image peut comprendre la reconnaissance d'un contour du document d'identité 1, le recadrage de ce contour, et l'application des masques prédéterminés. Pour cela, des réseaux de neurones à convolutions adaptés pourront être utilisés astucieusement. Similairement, en ce qui concerne la donnée de lecture optique il existe des algorithmes permettant son extraction automatique, ce d'autant plus que les zones de type MRZ sont tout spécialement prévues pour être lues facilement par un ordinateur.

Une fois que la photographie a été « isolée » sur l'image, on applique les mêmes algorithmes que ceux qui ont été appliqués sur la photographie d'origine pour obtenir les informations candidates représentatives de l'apparence de la photographie tel que représenté.

On comprend que les informations de référence et candidate devront être obtenues de manière identique de sorte à pouvoir être comparées.

Dans une étape (d), les moyens de traitement de données 21 du serveur 2 calculent une donnée décodée par application d'une procédure de décodage à ladite information candidate (DPS) représentative de l'apparence de ladite photographie et à ladite donnée encodée stockée sur les moyens de stockage de données 22 du serveur 2.

Plus précisément, le serveur 2 accède à la donnée encodée SSK associée au document d'identité 1 (typiquement référencée avec l'empreinte de son identifiant, cet identifiant pouvant être obtenu de la MRZ par exemple), et appliquent ladite procédure de décodage susmentionnée. Comme expliqué, si l'information de référence et l'information candidate sont suffisamment proches, la valeur décodée correspondra à la valeur d'aléa RNG utilisée pour obtenir cette donnée encodée SSK.

De façon générale, le résultat d'une comparaison de l'information candidate et de l'information de référence doit montrer qu'elles sont identiques, ou du moins présenter une distance inférieure à un seuil d'erreur prédéterminé. Par exemple, pour les éléments graphiques de type photographie, des données de sécurité de type Digital Photo Seal coïncident si elle différent de moins de 10%.

On comprend ainsi que la valeur d'aléa « masquée » par le DPS peut être récupérée si l'utilisateur dispose d'une photographie identique à celle utilisée lors de l'enrôlement dont est tirée l'information de référence.

Dans une étape (e), les moyens de traitement de données 21 vérifient qu'une empreinte cryptographique d'une première concaténation de la donnée de lecture optique extraite et de la donnée décodée coïncide avec l'empreinte cryptographique de la première concaténation de la donnée de lecture optique du document d'identité 1 et de la donnée d'aléa stockée sur les moyens de stockage de données 22 du serveur 2.

En d'autres termes, le serveur 2 tente de reconstituer la première empreinte en effectuant la même première concaténation de la donnée de lecture optique extraite et de la donnée décodée.

Si :
- la donnée de lecture optique extraite coïncide avec la donnée de lecture optique utilisée lors de l'enrôlement ; et
- la donnée décodée coïncide avec la donnée d'aléa ;

Alors la première concaténation donnera exactement le même résultat et on arrivera à nouveau à la première empreinte.

Dans tous les autres cas, l'entropie des fonctions de hachage cryptographique fait qu'on arrivera à un résultat très différent. Si le document 1 a été altéré (par exemple en remplaçant la photographie), alors les informations candidates et de référence correspondantes ne coïncideront pas, on obtiendra donc une fausse valeur de l'aléa et donc de la première empreinte, et l'authentification sera rejetée. Une alerte pour utilisation frauduleuse peut être émise.

Si on a retrouvé la première empreinte, c'est que le document d'identité 1 est valide, i.e. non falsifié. On peut éventuellement consulter un descripteur associé à la première empreinte pour obtenir le statut du document 1 : « OK, « Expiré », « KO ». Par exemple, ce statut peut définir si le détenteur du document 1 a le droit de pénétrer dans une zone à l'entrée de laquelle a lieu le contrôle.

S'il a le statut OK il peut rentrer, et s'il a le statut Expiré c'est qu'il a normalement le droit de rentrer mais qu'il faut qu'il mette à jour son accès. S'il a le statut KO cela signifie qu'il a bien été reconnu, mais qu'il n'a pas le niveau d'autorisation suffisant.

Alternativement, le serveur 2 peut, lorsque le document 1 est authentifié avec succès, transmettre à l'éventuelle entité connectée auprès de laquelle l'individu souhaite l'authentification (par exemple un serveur mettant en œuvre un service comme expliqué) une autorisation par exemple chiffrée avec une clé publique de ladite entité (l'autorisation en elle-même est typiquement un token à usage unique). Alternativement, une telle autorisation chiffrée peut être transmise à l'équipement client 3, pour retransmission à l'entité connectée, et déchiffrement et vérification par cette dernière. Un tel mode de réalisation est particulièrement avantageux car il permet une confidentialité totale : non seulement le serveur 2 n'a pas accès aux données personnelles de l'individu, mais en plus il n'a aucun contact avec l'entité connectée auprès de laquelle l'individu souhaite l'authentification de sorte qu'il n'a même pas la possibilité de savoir pourquoi l'authentification est requise.

A ce stade, l'individu peut se voir demander la fourniture de données personnelles, par exemple des données alphanumériques pour remplir un registre s'il s'est vu autoriser l'accès, ou pour remplir un formulaire demandé par le service mis en œuvre par l'entité connectée. A présent, il va pouvoir utiliser astucieusement la deuxième concaténation pour obtenir automatiquement ces données.

Pour cela, dans une dernière étape (f) (qui peut éventuellement être conditionnée à un statut particulier, par exemple uniquement si l'individu a le droit d'aller plus loin), alors les moyens de traitement de données 21 déchiffrent l'au moins une donnée personnelle dudit individu chiffrée stockée sur les moyens de stockage de données 22 du serveur 2 au moyen de l'empreinte cryptographique d'une deuxième concaténation de la donnée de lecture optique extraite et de la donnée décodée.

En effet, à ce stade on sait que la donnée décodée correspond à la donnée d'aléa et que l'individu a pu reconstituer avec succès la première empreinte. En changeant seulement de concaténation (en particulier en inversant la MRZ et l'aléa), et en appliquant à nouveau la fonction de hachage cryptographique, il peut reconstituer la deuxième empreinte, qui constitue la clé privée des données personnelles.

Tout ou partie de celles-ci, à sa demande, sont alors transférées à l'équipement client 3. On comprend que, pour garantir au maximum la confidentialité, que le serveur 2 fournisse en l'état les données chiffrées, et que ce soit au niveau du client 3 que le déchiffrement ait lieu, de sorte à éviter tout transfert en clair de données personnelles.

A noter qu'on pourrait prévoir que l'utilisateur soit autorisé à en profiter pour mettre à jour ces données personnelles : si par exemple son adresse a changé, il modifie les données avant de les rechiffrer, et de retransmettre l'ensemble au serveur 2 pour stockage.

### Serveur

Selon un troisième aspect, est proposé le serveur 2 d'authentification pour la mise en œuvre des procédés selon le premier ou le deuxième aspect, i.e. d'enrôlement et d'authentification d'un document d'identité 1.

Le serveur 2 est typiquement connecté à un réseau 20, et comprend des moyens de stockage de données 22 et des moyens de traitement de données 21 configurés pour (dans le cas de l'enrôlement) :
- Recevoir une photographie dudit individu visible sur ledit document d'identité 1, une donnée de lecture optique du document d'identité 1, et au moins une donnée personnelle dudit individu ;
- Extraire par analyse de ladite photographie une information DPS de référence représentative de l'apparence de ladite photographie ;
- Générer une donnée d'aléa RNG, et calculer une donnée encodée SSK par application d'une procédure d'encodage à ladite information DPS de référence représentative de l'apparence de ladite photographie et à ladite donnée d'aléa ;
- Stocker sur les moyens de stockage de données 22 :
   - Ladite donnée encodée SSK ;
   - Une empreinte cryptographique d'une première concaténation de la donnée de lecture optique du document d'identité 1 et de la donnée d'aléa RNG ;
   - Un chiffré avec une empreinte cryptographique d'une deuxième concaténation de la donnée de lecture optique du document d'identité 1 et de la donnée d'aléa RNG, différente de la première concaténation, de l'au moins une donnée personnelle dudit individu.

Dans le cas de l'authentification, les moyens de traitement de données 21 sont par ailleurs configurés pour :
- Recevoir une image acquise d'un document d'identité 1, l'image représentant au moins une photographie d'un individu et une donnée de lecture optique visibles sur ledit document d'identité 1 ;
- extraire par analyse de ladite image acquise :
   - une information candidate représentative de l'apparence de ladite photographie tel que représentée dans l'image acquise ;
   - ladite donnée de lecture optique tel que représentée dans l'image acquise ;

   - Calculer une donnée décodée correspondant à une donnée d'aléa RNG par application d'une procédure de décodage à ladite information DPS candidate représentative de l'apparence de ladite photographie et à une donnée encodée stockée sur les moyens de stockage de données 22 ;
   - Vérifier qu'une empreinte cryptographique d'une première concaténation de la donnée de lecture optique extraite et de la donnée décodée coïncide avec l'empreinte cryptographique de la première concaténation de la donnée de lecture optique du document d'identité 1 et de la donnée d'aléa stockée sur les moyens de stockage de données 22 ;
   - Déchiffrer l'au moins une donnée personnelle dudit individu chiffrée stockée sur les moyens de stockage de données 22, au moyen de l'empreinte cryptographique d'une deuxième concaténation de la donnée de lecture optique extraite et de la donnée décodée Le système peut en outre comprendre au moins un équipement client 3 (typiquement connecté au serveur 2 via le réseau 20, directement ou indirectement) comprenant des moyens d'acquisition optique 30 pour l'acquisition de ladite image du document d'identité 1.

### Produit programme d'ordinateur

Selon un quatrième et un cinquième aspects, l'invention concerne un produit programme d'ordinateur comprenant des instructions de code pour l'exécution (en particulier sur les moyens de traitement de données 21 du serveur 2) d'un procédé selon le premier ou le deuxième aspect de l'invention, ainsi que des moyens de stockage lisibles par un équipement informatique (une mémoire 22 du serveur 2) sur lequel on trouve ce produit programme d'ordinateur.

## Revendications

1. Procédé d'enrôlement de données d'un document d'identité (1) d'un individu, le procédé comprenant la mise en œuvre par des moyens de traitement de données (21) d'un serveur (2) d'étapes de :
(A) Réception d'une photographie dudit individu visible sur ledit document d'identité (1), une donnée de lecture optique du document d'identité (1), et d'au moins une donnée personnelle dudit individu ;
(B) Extraction par analyse de ladite photographie d'une information de référence représentative de l'apparence de ladite photographie ;
(C) Génération d'une donnée d'aléa, calcul d'une donnée encodée par application d'une procédure d'encodage à ladite information de référence représentative de l'apparence de ladite photographie et à ladite donnée d'aléa ;
(D) Stockage sur des moyens de stockage de données (22) du serveur (2) de :
• Ladite donnée encodée,
**caractérisé en ce que** l'étape D. comprend le stockage sur des moyens de stockage de données du serveur de:
• Une empreinte cryptographique d'une première concaténation de la donnée de lecture optique du document d'identité (1) et de la donnée d'aléa ;
• Un chiffré avec une empreinte cryptographique d'une deuxième concaténation de la donnée de lecture optique du document d'identité (1) et de la donnée d'aléa, différente de la première concaténation, de l'au moins une donnée personnelle dudit individu.

2. Procédé selon la revendication 1, dans lequel la procédure d'encodage est une procédure d'esquisse d'un algorithme de type « secure sketch ».

3. Procédé selon l'une des revendications 1 et 2, dans laquelle la donnée de lecture optique du document d'identité (1) est une donnée de type MRZ, QR code ou PDF417.

4. Procédé selon l'une des revendications 1 à 3, dans lequel ladite donnée personnelle dudit individu est une donnée alphanumérique associé audit individu, ladite photographie de l'individu, ladite donnée de lecture optique, et ladite au moins une donnée alphanumérique sont imprimées sur le document d'identité (1).

5. Procédé selon l'une des revendications 1 à 4, dans lequel l'information de référence représentative d'une apparence attendue de ladite photographie est une donnée de sécurité de type Digital Photo Seal.

6. Procédé selon l'une des revendications 1 à 5, dans lequel la première et la deuxième concaténation correspondent aux deux sens possibles de concaténation de la donnée de lecture optique du document d'identité (1) et de la donnée d'aléa.

7. Procédé d'authentification d'un document d'identité (1) comprenant la mise en œuvre d'étapes de ;
(b) Réception par des moyens de traitement de données (21) d'un serveur (2) d'une image acquise dudit document d'identité (1), l'image représentant au moins une photographie d'un individu et une donnée de lecture optique visibles sur ledit document d'identité (1) ;
(c) Extraction par analyse de ladite image acquise par les moyens de traitement de données (21) du serveur (2) de :
• une information candidate représentative de l'apparence de ladite photographie tel que représentée dans l'image acquise ;
• ladite donnée de lecture optique tel que représentée dans l'image acquise ;
(d) Calcul d'une donnée décodée correspondant à une donnée d'aléa par application d'une procédure de décodage à ladite information candidate représentative de l'apparence de ladite photographie et à une donnée encodée stockée sur les moyens de stockage de données (22) du serveur (2), caractérisé en que que le procédé comprend également les étapes de:
(e) Vérification qu'une empreinte cryptographique d'une première concaténation de la donnée de lecture optique extraite et de la donnée décodée coïncide avec l'empreinte cryptographique de la première concaténation de la donnée de lecture optique du document d'identité (1) et de la donnée d'aléa stockée sur les moyens de stockage de données (22) du serveur (2) ;
(f) Déchiffrement de l'au moins une donnée personnelle dudit individu chiffrée stockée sur les moyens de stockage de données (22) du serveur (2), au moyen de l'empreinte cryptographique d'une deuxième concaténation de la donnée de lecture optique extraite et de la donnée décodée.

8. Procédé selon la revendication 7, comprenant une étape (a) d'acquisition préalable de ladite image dudit document d'identité (1) représentant au moins une photographie d'un individu et une donnée de lecture optique visibles sur ledit document d'identité (1) par des moyens d'acquisition optique (30) d'un équipement client (3).

9. Serveur d'authentification (2) comprenant des moyens de stockage de données (22) et des moyens de traitement de données (21) configurés pour :
- Recevoir une photographie dudit individu visible sur ledit document d'identité (1), une donnée de lecture optique du document d'identité (1), et au moins une donnée personnelle dudit individu ;
- Extraire par analyse de ladite photographie une information de référence représentative de l'apparence de ladite photographie ;
- Générer une donnée d'aléa, et calculer une donnée encodée par application d'une procédure d'encodage à ladite information de référence représentative de l'apparence de ladite photographie et à ladite donnée d'aléa ;
- Stocker sur les moyens de stockage de données (22) :
• Ladite donnée encodée,
**caractérisé en ce que** les éléments suivants sont également stockés sur les moyens de stockage de données (22):
• Une empreinte cryptographique d'une première concaténation de la donnée de lecture optique du document d'identité (1) et de la donnée d'aléa ;
• Un chiffré avec une empreinte cryptographique d'une deuxième concaténation de la donnée de lecture optique du document d'identité (1) et de la donnée d'aléa, différente de la première concaténation, de l'au moins une donnée personnelle dudit individu.

10. Serveur selon la revendication 9, dans lequel les moyens de traitement de données (21) sont en outre configurés pour :
- Recevoir une image acquise d'un document d'identité (1), l'image représentant au moins une photographie d'un individu et une donnée de lecture optique visibles sur ledit document d'identité (1) ;
- extraire par analyse de ladite image acquise :
• une information candidate représentative de l'apparence de ladite photographie tel que représentée dans l'image acquise ;
• ladite donnée de lecture optique tel que représentée dans l'image acquise ;
- Calculer une donnée décodée correspondant à une donnée d'aléa par application d'une procédure de décodage à ladite information candidate représentative de l'apparence de ladite photographie et à une donnée encodée stockée sur les moyens de stockage de données (22) ;
- Vérifier qu'une empreinte cryptographique d'une première concaténation de la donnée de lecture optique extraite et de la donnée décodée coïncide avec l'empreinte cryptographique de la première concaténation de la donnée de lecture optique du document d'identité (1) et de la donnée d'aléa stockée sur les moyens de stockage de données (22) ;
- Déchiffrer l'au moins une donnée personnelle dudit individu chiffrée stockée sur les moyens de stockage de données (22), au moyen de l'empreinte cryptographique d'une deuxième concaténation de la donnée de lecture optique extraite et de la donnée décodée.

11. Produit programme d'ordinateur comprenant des instructions de code pour l'exécution d'un procédé selon l'une des revendications 1 à 8 d'enrôlement de données d'un document d'identité (1) d'un individu ou d'authentification d'un document d'identité (1), lorsque ledit procédé est exécuté sur un ordinateur.

12. Moyen de stockage lisible par un équipement informatique sur lequel un produit programme d'ordinateur comprend des instructions de code pour l'exécution d'un procédé selon l'une des revendications 1 à 8 d'enrôlement de données d'un document d'identité (1) d'un individu ou d'authentification d'un document d'identité (1).

## Patentansprüche

1. Verfahren zur Speicherung von Daten eines Identitätsdokuments (1) einer Person, wobei das Verfahren die Durchführung, durch Datenverarbeitungsmittel (21) eines Servers (2), folgender Schritte umfasst:
(A) Empfangen einer Fotografie der Person, die auf dem Identitätsdokument (1) sichtbar ist, eines optisch ausgelesenen Datenelements des Identitätsdokuments (1) und mindestens eines persönlichen Datenelements der Person;
(B) Extraktion, durch Analyse der Fotografie, einer Referenzinformation, die für das Erscheinungsbild der Fotografie repräsentativ ist;
(C) Generieren eines Zufallsdatenelements, Berechnen eines codierten Datenelements durch Anwenden eines Codierungsprozederes auf die Referenzinformation, die für das Erscheinungsbild der Fotografie repräsentativ ist, und auf das Zufallsdatenelement;
(D) Speichern, auf Datenspeichermitteln (22) des Servers (2):
• des codierten Datenelements;
**dadurch gekennzeichnet, dass** der Schritt D. das Speichern auf Datenspeichermitteln des Servers umfasst:
• eines Hashwerts einer ersten Konkatenation des optisch ausgelesenen Datenelements des Identitätsdokuments (1) und des Zufallsdatenelements;
• eine Chiffrierung mit einem Hashwert einer zweiten Konkatenation des optisch ausgelesenen Datenelements des Identitätsdokuments (1) und des Zufallsdatenelements, die sich von der ersten Konkatenation unterscheidet, des mindestens einen persönlichen Datenelements der Person.

2. Verfahren nach Anspruch 1, wobei das Codierungsprozedere ein Skizzierungsprozedere eines Algorithmus vom Typ "secure sketch" ist.

3. Verfahren nach einem der Ansprüche 1 und 2, wobei das optisch ausgelesene Datenelement des Identitätsdokuments (1) ein Datenelement vom Typ MRZ, QR-Code oder PDF417 ist.

4. Verfahren nach einem der Ansprüche 1 bis 3, wobei das persönliche Datenelement der Person ein alphanumerisches Datenelement ist, das der Person zugeordnet ist, wobei die Fotografie der Person, das optisch ausgelesene Datenelement und das mindestens eine alphanumerische Datenelement auf dem Identitätsdokument (1) gedruckt sind.

5. Verfahren nach einem der Ansprüche 1 bis 4, wobei die Referenzinformation, die für ein erwartetes Erscheinungsbild der Fotografie repräsentativ ist, ein Sicherheitsdatenelement vom Typ Digital Photo Seal ist.

6. Verfahren nach einem der Ansprüche 1 bis 5, wobei die erste und die zweite Konkatenation zwei möglichen Konkatenationsrichtungen des optisch ausgelesenen Datenelements des Identitätsdokuments (1) und des Zufallsdatenelements entsprechen.

7. Verfahren zur Authentifizierung eines Identitätsdokuments (1), umfassend die Durchführung der folgenden Schritte:
(b) Empfangen, durch Datenverarbeitungsmittel (21) eines Servers (2), eines erfassten Bildes des Identitätsdokuments (1), wobei das Bild mindestens eine Fotografie einer Person und ein optisch ausgelesenes Datenelement darstellt, die auf dem Identitätsdokument (1) sichtbar sind;
(c) Extraktion, durch Analyse des von den Datenverarbeitungsmitteln (21) des Servers (2) aufgenommenen Bildes:
• einer Kandidateninformation, die für das Erscheinungsbild der Fotografie repräsentativ ist, so wie auf dem aufgenommenen Bild dargestellt;
• des optisch ausgelesenen Datenelements, so wie auf dem aufgenommenen Bild dargestellt;
(d) Berechnen eines decodierten Datenelements, das einem Zufallsdatenelement entspricht, durch Anwenden eines Decodierungsprozederes auf die Kandidateninformation, die für das Erscheinungsbild der Fotografie repräsentativ ist, und auf ein codiertes Datenelement, das auf den Datenspeichermitteln (22) des Servers (2) gespeichert ist, **dadurch gekennzeichnet, dass** das Verfahren ebenfalls folgende Schritte umfasst:
(e) Verifizieren, dass ein Hashwert einer ersten Konkatenation des extrahierten optisch ausgelesenen Datenelements und des decodierten Datenelements mit dem Hashwert der ersten Konkatenation des optisch ausgelesenen Datenelements des Identitätsdokuments (1) und des Zufallsdatenelements übereinstimmt, das auf den Datenspeichermitteln (22) des Servers (2) gespeichert ist;
(f) Dechiffrieren des mindestens einen chiffrierten persönlichen Datenelements der Person, das auf den Datenspeichermitteln (22) des Servers (2) gespeichert ist, mittels des Hashwerts einer zweiten Konkatenation des extrahierten optisch ausgelesenen Datenelements und des decodierten Datenelements.

8. Verfahren nach Anspruch 7, umfassend einen Schritt (a) des vorherigen Erfassens des Bildes des Identitätsdokuments (1), das mindestens eine Fotografie einer Person und ein optisch ausgelesenes Datenelement darstellt, die auf dem Identitätsdokument (1) sichtbar sind, durch optische Erfassungsmittel (30) einer Client-Ausrüstung (3).

9. Authentifizierungsserver (2), umfassend Datenspeichermittel (22) und Datenverarbeitungsmittel (21), die ausgelegt sind, um:
- eine Fotografie der Person, die auf dem Identitätsdokument (1) sichtbar ist, ein optisch ausgelesenes Datenelement des Identitätsdokuments (1) und mindestens ein persönliches Datenelement der Person zu erhalten;
- durch Analyse der Fotografie eine Referenzinformation zu extrahieren, die für das Erscheinungsbild der Fotografie repräsentativ ist;
- ein Zufallsdatenelement zu generieren und ein codiertes Datenelement durch Anwenden eines Codierungsprozederes auf die Referenzinformation, die für das Erscheinungsbild der Fotografie repräsentativ ist, und auf das Zufallsdatenelement zu berechnen;
- auf den Datenspeichermitteln (22) zu speichern:
• das codierte Datenelement,
**dadurch gekennzeichnet, dass** die folgenden Elemente ebenfalls auf den Datenspeichermitteln (22) gespeichert werden:
• ein Hashwert einer ersten Konkatenation des optisch ausgelesenen Datenelements des Identitätsdokuments (1) und des Zufallsdatenelements;
• eine Chiffrierung mit einem Hashwert einer zweiten Konkatenation des optisch ausgelesenen Datenelements des Identitätsdokuments (1) und des Zufallsdatenelements, die sich von der ersten Konkatenation unterscheidet, des mindestens einen persönlichen Datenelements der Person.

10. Server nach Anspruch 9, wobei die Datenverarbeitungsmittel (21) ferner ausgelegt sind, um:
- ein aufgenommenes Bild eines Identitätsdokuments (1) zu empfangen, wobei das Bild mindestens eine Fotografie einer Person und ein optisch ausgelesenes Datenelement darstellt, die auf dem Identitätsdokument (1) sichtbar sind;
- durch Analyse des aufgenommenen Bildes zu extrahieren:
• eine Kandidateninformation, die für das Erscheinungsbild der Fotografie repräsentativ ist, wie im aufgenommenen Bild dargestellt;
• das optisch ausgelesene Datenelement, wie im aufgenommenen Bild dargestellt;
- ein decodiertes Datenelement, das einem Zufallsdatenelement entspricht, durch Anwenden eines Decodierungsprozederes auf die Kandidateninformation, die für das Erscheinungsbild der Fotografie repräsentativ ist, und auf ein codiertes Datenelement, das auf den Datenspeichermitteln (22) gespeichert ist, zu berechnen;
- zu verifizieren, dass ein Hashwert einer ersten Konkatenation des extrahierten optisch ausgelesenen Datenelements und des decodierten Datenelements mit dem Hashwert der ersten Konkatenation des optisch ausgelesenen Datenelements des Identitätsdokuments (1) und des Zufallsdatenelements übereinstimmt, das auf den Datenspeichermitteln (22) gespeichert ist;
- Dechiffrieren des mindestens einen chiffrierten persönlichen Datenelements der Person, das auf den Datenspeichermitteln (22) gespeichert ist, mittels des Hashwerts einer zweiten Konkatenation des extrahierten optisch ausgelesenen Datenelements und des decodierten Datenelements.

11. Rechnerprogrammprodukt, umfassend Codebefehle für die Ausführung eines Verfahrens nach einem der Ansprüche 1 bis 8 zur Datenspeicherung eines Identitätsdokuments (1) einer Person oder zur Authentifizierung eines Identitätsdokuments (1), wenn das Verfahren auf einem Rechner ausgeführt wird.

12. Speichermittel, das von einer IT-Ausrüstung lesbar ist, wobei ein Rechnerprogrammprodukt Codebefehle für die Ausführung eines Verfahrens nach einem der Ansprüche 1 bis 8 zur Datenspeicherung eines Identitätsdokuments (1) einer Person oder zur Authentifizierung eines Identitätsdokuments (1) umfasst.

## Claims

1. A method of enrolling data from an individual's identity document (1), the method comprises implementing by a server (2) data processing means (21), the following steps:
(A) Receipt of a photograph of said individual visible on said identity document (1), an optical reading data element of the identity document (1), and at least one personal data element of said individual;
(B) Extraction by analysis of said photograph of a reference information representative of the appearance of said photograph;
(C) Generation of a random string, calculation of an encoded data element by applying an encoding procedure to said reference information representative of the appearance of said photograph and said random string;
(D) Storage on the server (2) data storage means (22) of:
• Said encoded data element;
**characterized in that** the step D comprises the storage on the server data storage means of:
• A hash value of a first concatenation of the optical reading data element of the identity document (1) and the random string;
• An encryption with a hash value of a second concatenation of the optical reading data element of the identity document (1) and the random string, different from the first concatenation, of the at least one personal data element of said individual.

2. A method according to claim 1, wherein the encoding procedure is a sketching procedure of a secure sketch algorithm.

3. A method according to any of claims 1 and 2, wherein the optical reading data element of the identity document (1) is a data of the MRZ, QR code or PDF417 type.

4. A method according to any of claims 1 to 3, wherein said personal data element of said individual is an alphanumeric data element associated with said individual, said photograph of the individual, said optical reading data element, and said at least one alphanumeric data element are printed on the identity document (1).

5. A method according to any of claims 1 to 4, wherein the reference information representative of an expected appearance of said photograph is a Digital Photo Seal security data element.

6. A method according to any of claims 1 to 5, wherein the first and second concatenation correspond to the two possible directions of concatenation of the optical reading data element of the identity document (1) and the random string.

7. A method for authenticating an identity document (1), comprising the implementation of the following steps:
(b) Receipt by a server (2) data processing means (21) of an acquired image of said identity document (1), the image representing at least a photograph of an individual and an optical reading data element visible on said identity document (1);
(c) Extraction, by analysis of said acquired image by the server (2) data processing means (21), of:
• candidate information representative of the appearance of said photograph as represented in the acquired image;
• said optical reading data element as represented in the acquired image;
(d) Calculation of a decoded data element corresponding to a random string by applying a decoding procedure to said candidate information representative of the appearance of said photograph and to an encoded data element stored on the server (2) data storage means (22), **characterized in that** the method also comprises the steps of:
(e) Verification that a hash value of a first concatenation of the extracted optical reading data element and the decoded data element matches the hash value of the first concatenation of the optical reading data element of the identity document (1) and the random string stored on the server (2) data storage means (22);
(f) Decrypting the at least one personal data element of said encrypted individual stored on the server (2) data storage means (22), by means of the hash value of a second concatenation of the extracted optical reading data element and the decoded data element.

8. A method according to claim 7, comprising a step (a) of pre-acquisition of said image of said identity document (1) representing at least a photograph of an individual and an optical reading data element visible on said identity document (1) by optical acquisition means (30) of a client equipment (3).

9. An authentication server (2), comprising data storage means (22) and data processing means (21) configured to:
- Receive a photograph of said individual visible on said identity document (1), an optical reading data element of the identity document (1), and at least one personal data element of said individual;
- Extract by analysis from said photograph reference information representative of the appearance of said photograph;
- Generate a random string, and calculate an encoded data element by applying an encoding procedure to said reference information representative of the appearance of said photograph and said random string;
- Store on the data storage means (22):
• Said encoded data element,
**characterized in that** the following elements are also stored on the data storage means (22):
• A hash value of a first concatenation of the optical reading data element of the identity document (1) and the random string;
• An encryption with a hash value of a second concatenation of the optical reading data element of the identity document (1) and the random string, different from the first concatenation, of the at least one personal data element of said individual.

10. A server according to claim 9, wherein the data processing means (21) are further configured to:
- Receive an acquired image of an identity document (1), the image representing at least a photograph of an individual and an optical reading data element visible on said identity document (1);
- extract, by analysis of said acquired image:
• candidate information representative of the appearance of said photograph as represented in the acquired image;
• said optical reading data element as represented in the acquired image;
- Calculate a decoded data element corresponding to a random string by applying a decoding procedure to said candidate information representative of the appearance of said photograph and to an encoded data element stored on the data storage means (22);
- Verify that a hash value of a first concatenation of the extracted optical reading data element and the decoded data element matches the hash value of the first concatenation of the optical reading data element of the identity document (1) and the random string stored on the data storage means (22);
- Decrypt the at least one personal data element of said encrypted individual stored on the data storage means (22), by means of the hash value of a second concatenation of the extracted optical reading data element and the decoded data element.

11. A computer program product comprising coding instructions for the execution of a method according to any of claims 1 to 8 of enrolling data from an individual's identity document (1) or authenticating an identity document (1), when said method is executed on a computer.

12. A storage means readable by computer equipment on which a computer program product comprises coding instructions for the execution of a method according to any of claims 1 to 8 of enrolling data from an individual's identity document (1) or authenticating an identity document (1).
